(19) Europäisches Patentamt
European Patent Office
Office européen des brevets

(11) EP 4 685 165 A1

(12) **EUROPEAN PATENT APPLICATION**
published in accordance with Art. 153(4) EPC

(43) Date of publication:
**28.01.2026 Bulletin 2026/05**

(21) Application number: **24774830.4**

(22) Date of filing: **14.03.2024**

(51) International Patent Classification (IPC):
***C08F 212/04*** *(2006.01)* ***C08F 236/04*** *(2006.01)*

(52) Cooperative Patent Classification (CPC):
**C08F 212/04; C08F 236/04**

(86) International application number:
**PCT/JP2024/010046**

(87) International publication number:
**WO 2024/195692 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.03.2023 JP 2023044151**

(71) Applicants:
- **Japan Elastomer Co., Ltd.**
**Tokyo 100-0006 (JP)**
- **Asahi Kasei Kabushiki Kaisha**
**Tokyo 1000006 (JP)**

(72) Inventors:
- **YASUMOTO, Atsushi**
**Tokyo 100-0006 (JP)**
- **HAYAMA, Tsuyoshi**
**Tokyo 100-0006 (JP)**
- **KONOMOTO, Tsuneaki**
**Tokyo 100-0006 (JP)**

(74) Representative: **Strehl & Partner mbB**
**Maximilianstrasse 54**
**80538 München (DE)**

(54) **CONJUGATED DIENE POLYMER AND CONJUGATED DIENE POLYMER COMPOSITION**

(57) Provided is a conjugated diene-based polymer, wherein a content of an aromatic vinyl monomer unit is 35% by mass or more and 70% by mass or less, an amount of 1,2-vinyl bond in a conjugated diene monomer unit is 21% by mol or more and 65% by mol or less, (A) a relative intensity at 6.0 ppm or more and less than 6.7 ppm, (B) a relative intensity at 6.7 ppm or more and less than 6.94 ppm, and (C) a relative intensity at 6.94 ppm or more and 7.60 ppm or less in $^1$H-NMR are (A) 0.5% or more and 25% or less, (B) 2% or more and 25% or less, and (C) 60% or more and 96.5% or less based on 100% in total of (A) + (B) + (C), and a peak top molecular weight of a peak having the largest area in a molecular weight distribution curve in GPC is 150000 or more and 600000 or less.

EP 4 685 165 A1

## Description

### Technical Field

The present invention relates to a conjugated diene-based polymer and a conjugated diene-based polymer composition.

### Background Art

Styrene-butadiene rubber produced by solution polymerization (SSBR) is a conjugated diene-based polymer composed of a butadiene monomer and a styrene monomer. This SSBR is widely used, mainly, as various materials in the automotive industry or materials for various industrial products such as shoe soles.

Particularly, tires in the automotive industry daily require improvement in performance of rubber materials. For example, an elevated styrene content in the conjugated diene-based polymer is expected to improve grip performance or improve tensile strength at high temperatures for preventing chipping during high speed running. For enhancing such performance, it is preferable to use SSBR having a high styrene content and amount of vinyl bond.

For improving the performance of rubber materials, it is also important to adjust the number of styrene units of a chain in the conjugated diene-based polymer and control the content of a styrene block.

However, an elevated content of a styrene block in the conjugated diene-based polymer has been reported to deteriorate the wear resistance of a rubber material using this conjugated diene-based polymer.

Patent Literatures 1 and 2 described below disclose SSBR having a high styrene content or amount of vinyl bond and an adjusted number of styrene units in a chain. These literatures propose a technique of using metal alkoxide or ether in order to obtain the SSBR.

### **Citation** List

### Patent Literature

Patent Literature 1: International Publication No. WO2012/119918

Patent Literature 2: International Publication No. WO2012/175680

## Summary of Invention

### Technical Problem

However, a problem of SSBR disclosed in Patent Literature 1 or 2 is being still susceptible to improvement from the viewpoint of the balance among the grip performance, wear resistance, and tensile characteristics at high temperatures of a composition for a tire.

Accordingly, an object of the present invention is to provide a conjugated diene-based polymer that produces a composition for a tire excellent in balance among grip performance, wear resistance, and tensile characteristics at high temperatures and also excellent in processability in blended product preparation.

### Solution to Problem

The present inventors have made intensive studies in order to solve the above problems of the prior art, and as a result, have found that a conjugated diene-based polymer in which a content of an aromatic vinyl monomer unit and an amount of 1,2-vinyl bond are respectively set to predetermined numerical value ranges, a content of a block having a chain with a predetermined number of aromatic vinyl monomer units is optimized, relative intensities in NMR measurement are set to predetermined numerical value ranges, and a peak top molecular weight in gel permeation chromatography (GPC) is set to a predetermined range, is excellent in processability in preparing a blended product and is excellent in balance among grip performance, wear resistance, and tensile characteristics at high temperatures in an application to tires, thereby leading to completion of the present invention

In other words, the present invention is as follows.

[1] A conjugated diene-based polymer, wherein

a content of an aromatic vinyl monomer unit is 35% by mass or more and 70% by mass or less,

an amount of 1,2-vinyl bond in a conjugated diene monomer unit is 21 % by mol or more and 65% by mol or less,

(A) a relative intensity at 6.0 ppm or more and less than 6.7 ppm, (B) a relative intensity at 6.7 ppm or more and less than 6.94 ppm, and (C) a relative intensity at 6.94 ppm or more and 7.60 ppm or less in $^1$H-NMR are (A) 0.5% or more and 25% or less, (B) 2% or more and 25% or less, and (C) 60% or more and 96.5% or less based on 100% in total of (A) + (B) + (C), and

a peak top molecular weight of a peak having the largest area in a molecular weight distribution curve in gel permeation chromatography (GPC) is 150000 or more and 600000 or less.

[2] The conjugated diene-based polymer according to [1], wherein
the content of the aromatic vinyl monomer unit is 45% by mass or more and 60% by mass or less.

[3] The conjugated diene-based polymer according to [1] or [2], wherein
a degree of modification is 60% or less.

[4] The conjugated diene-based polymer according to any one of [1] to [3], wherein
a total value of the relative intensities of (A) + (B) is 17% or more and 39% or less.

[5] The conjugated diene-based polymer according to any one of [1] to [4], wherein

the relative intensity (A) is 5% or more and 15% or less, and

the relative intensity (C) is 60% or more and 96% or less.

[6] The conjugated diene-based polymer according to any one of [1] to [4], wherein

the relative intensity (A) is 0.5% or more and 15% or less, and

the relative intensity (C) is 60% or more and 96% or less.

[7] The conjugated diene-based polymer according to any one of [1] to [6] which is a rubber bale formed body.

[8] A conjugated diene-based polymer composition comprising the conjugated diene-based polymer according to any one of [1] to [6].

[9] The conjugated diene-based polymer composition according to [8] which is a composition for a tire.

[10] The conjugated diene-based polymer composition according to [8] which is a composition for a shoe sole.

[11] The conjugated diene-based polymer composition according to [8] which is a composition for a vibration isolation rubber.

## Advantageous Effect of Invention

The present invention can provide a conjugated diene-based polymer that produces a conjugated diene-based polymer composition excellent in balance among grip performance, wear resistance, and tensile characteristics at high temperatures, and is excellent in processability in blended product preparation.

## Description of Embodiments

Hereinafter, the mode for carrying out the present invention (hereinafter, referred to as "the present embodiment") is described in detail.
Herein, the following present embodiment is illustrative for describing the present invention, and the present invention is not limited to the embodiments given below. The present invention can be variously changed or modified and carried out without departing from the gist thereof.

[Conjugated diene-based polymer]

The conjugated diene-based polymer of the present embodiment comprises a structure unit derived from an aromatic vinyl compound (hereinafter, also referred to as "aromatic vinyl monomer unit") and a structure unit derived from a conjugated diene compound (hereinafter, also referred to as "conjugated diene-based monomer unit").

In the conjugated diene-based polymer of the present embodiment,

a content of an aromatic vinyl monomer unit is 35% by mass or more and 70% by mass or less,

an amount of 1,2-vinyl bond in a conjugated diene monomer unit is 21 % by mol or more and 65% by mol or less,

(A) a relative intensity at 6.0 ppm or more and less than 6.7 ppm, (B) a relative intensity at 6.7 ppm or more and less than 6.94 ppm, and (C) a relative intensity at 6.94 ppm or more and 7.60 ppm or less in $^{1}$H-NMR are

(A) 0.5% or more and 25% or less,

(B) 2% or more and 25% or less, and

(C) 60% or more and 96.5% or less based on 100% in total of (A) + (B) + (C), and

a peak top molecular weight of a peak having the largest area in a molecular weight distribution curve in gel permeation chromatography (GPC) is 150000 or more and 600000 or less.

The configuration described above can provide a conjugated diene-based polymer that produces a conjugated diene-based polymer composition excellent in balance among grip performance, wear resistance, and tensile characteristics at high temperatures, and is excellent in processability in blended product preparation.
Examples of the aromatic vinyl compound include, but not limited to the following, styrene, p-methylstyrene, $\alpha$-methylstyrene, vinylethylbenzene, vinylxylene, vinylnaphthalene, and diphenylethylene. In particular, styrene is preferable from the viewpoint of industrial availability.
These may be used singly or in combinations of two or more kinds thereof.
Examples of the conjugated diene compound include, but are not limited, 1,3-butadiene, isoprene, 2,3-dimethyl-1,3-butadiene, 1,3-pentadiene, 3-methyl-1,3-pentadiene, 1,3-hexadiene, and 1,3-heptadiene. In particular, 1,3-butadiene and isoprene are preferable and 1,3-butadiene is more preferable from the viewpoint of industrial availability.
These may be used singly or in combinations of two or more kinds thereof.
The conjugated diene-based polymer of the present embodiment may further contain a monomer unit derived from other monomer, in addition to the above aromatic vinyl compound and conjugated diene compound.
Examples of the above other monomer include, but not limited to the following, acrylonitrile, methyl methacrylate, and methyl acrylate.
A feature of the conjugated diene-based polymer of the present embodiment is that a so-called microstructure (the content of the aromatic vinyl monomer unit, the amount of 1,2-vinyl bond, etc.) of a copolymer of the conjugated diene compound and the aromatic vinyl compound is controlled.

(Content of aromatic vinyl monomer unit)

In the conjugated diene-based polymer of the present embodiment, the content of the aromatic vinyl monomer unit is 35% by mass or more, preferably 40% by mass or more, more preferably 45% by mass or more, further preferably more than 45% by mass, still further preferably 46% by mass or more, from the viewpoint of the grip performance and tensile characteristics at high temperatures of a conjugated diene-based polymer composition described below, which is a composition using the conjugated diene-based polymer of the present embodiment. The content is 70% by mass or less, preferably 68% by mass or less, more preferably 65% by mass or less, further preferably 63% by mass or less, still further preferably 60% by mass or less, from the viewpoint of bale formability, grindability, and the wear resistance of the conjugated diene-based polymer composition.
The content of the aromatic vinyl monomer unit can be measured by $^{1}$H-NMR.
The content of the aromatic vinyl monomer unit can be controlled within the above numerical value range by adjusting the amount of addition of the aromatic vinyl compound during polymerization.

(Amount of 1,2-vinyl bond)

The amount of 1,2-vinyl bond in the conjugated diene-based polymer of the present embodiment is a molar proportion of the amount of 1,2-vinyl bond based on the content of the conjugated diene monomer unit and is 21 % by mol or more, preferably 25% by mol or more, more preferably 30% by mol or more, further preferably 35% by mol or more, from the viewpoint of the grip performance and tensile characteristics at high temperatures of the conjugated diene-based polymer composition of the present embodiment described below. On the other hand, the amount is 65% by mol or less, preferably 60% by mol or less, more preferably 58% by mol or less, further preferably 55% by mol or less, from the viewpoint of easy polymerization and difficult gel formation.
The amount of 1,2-vinyl bond can be measured by $^1$H-NMR.
The amount of 1,2-vinyl bond can be controlled within the above numerical value range by adjusting reaction start temperature and reaction end temperature during polymerization or the type and amount of addition of a polar substance.
In a case where the conjugated diene-based polymer of the present embodiment is a copolymer of butadiene and styrene, the amount of 1,2-vinyl bond and the styrene content can be measured by a method described in ISO21561-2005 and specifically, can be measured by a method described in Examples below.

(Relative intensity in $^1$H-NMR measurement)

In the case of measuring the conjugated diene-based polymer of the present embodiment using $^1$H-NMR,

As for (A) a relative intensity at 6.0 ppm or more and less than 6.7 ppm,
(B) a relative intensity at 6.7 ppm or more and less than 6.94 ppm, and
(C) a relative intensity at 6.94 ppm or more and 7.60 ppm or less,
the respective relative intensities based on 100% in total of (A) + (B) + (C) are

(A) 0.5% or more and 25% or less,
(B) 2% or more and 25% or less, and
(C) 60% or more and 96.5% or less.

For example, a solvent containing 0.05% by mass of TMS (tetramethylsilane) based on deuterated chloroform can be used as a solvent for measurement.
Each relative intensity has been reported to refer to the following content.
In a case where the conjugated diene-based polymer of the present embodiment is a copolymer of butadiene and styrene, the content of block styrene having more than 6 consecutive styrene units can be measured according to a method reported by Y. Tanaka et al., in Rubber Chemistry and Technology, 1981, 54, No. 4. 685-691 using the relative intensity at 6.0 ppm or more and less than 6.7 ppm.
In other words, the relative intensity (A) is the relative intensity of block styrene having more than 6 consecutive styrene units by $^1$H-NMR measurement.
The content of block styrene having 4 to 6 consecutive styrene units can be measured using the relative intensity at 6.70 ppm or more and less than 6.94 ppm.
In other words, the relative intensity (B) is the relative intensity of block styrene having 4 to 6 consecutive styrene units by $^1$H-NMR measurement.
The content of block styrene having less than 4 consecutive styrene units or random styrene can be measured using the relative intensity at 6.94 ppm or more and less than 7.60 pp.
In other words, the relative intensity (C) is the relative intensity of block styrene having less than 4 consecutive styrene units or random styrene by $^1$H-NMR measurement.
The relative intensity (C) in the conjugated diene-based polymer of the present embodiment is 60% or more, preferably 63% or more, more preferably 65% or more, further preferably 70% or more, from the viewpoint of the wear resistance of the conjugated diene-based polymer composition of the present embodiment described below.
On the other hand, the relative intensity (C) is 96.5% or less, preferably 96% or less, more preferably 95% or less, further preferably 93% or less, still further preferably 90% or less, even further preferably 88% or less, from the viewpoint of the tensile characteristics at high temperatures of the conjugated diene-based polymer composition of the present embodiment.
The relative intensity (B) in the conjugated diene-based polymer of the present embodiment is 2% or more, preferably 3% or more, more preferably 5% or more, from the viewpoint of the tensile strength at high temperatures of the conjugated diene-based polymer composition of the present embodiment described below.
On the other hand, the relative intensity (B) is 25% or less, preferably 23% or less, more preferably 21 % or less, further preferably 20% or less, from the viewpoint of the wear resistance of the conjugated diene-based polymer composition of the present embodiment.

The relative intensity (A) in the conjugated diene-based polymer of the present embodiment is 0.5% or more, preferably 1% or more, more preferably 2% or more, further preferably 5% or more, still further preferably more than 5%, from the viewpoint of the rigidity and maneuvering stability of the conjugated diene-based polymer composition of the present embodiment described below.

On the other hand, the relative intensity (A) is 25% or less, preferably 20% or less, more preferably 15% or less, further preferably less than 15%, still further preferably 14% or less, from the viewpoint of the grindability of a bale formed body, the wear resistance of the conjugated diene-based polymer composition described below, and fuel economy performance.

The total value of the relative intensity (A) and the relative intensity (B) ((A) + (B)) is preferably 17% or more, more preferably 19% or more, further preferably 21% or more, from the viewpoint of the rigidity and tensile characteristics at high temperatures of the conjugated diene-based polymer composition of the present embodiment described below. The total value is preferably 39% or less, more preferably 37% or less, further preferably 35% or less, from the viewpoint of the grindability of a bale formed body and the wear resistance of the conjugated diene-based polymer composition of the present embodiment described below.

Each of the relative intensities (A), (B), and (C) of the conjugated diene-based polymer of the present embodiment can be controlled by adjustment of an aromatic vinyl monomer unit content in which less than 4 consecutive aromatic vinyl monomer units are integrated (content of an aromatic vinyl monomer block composed of less than 4 consecutive aromatic vinyl monomer units based on all aromatic vinyl monomers used), an aromatic vinyl monomer unit content in which 4 to 6 consecutive aromatic vinyl monomer units are integrated, and an aromatic vinyl monomer unit content in which more than 6 consecutive aromatic vinyl monomer units are integrated, on the basis of the content of the aromatic vinyl monomer unit. Specifically, each of the relative intensities can be controlled by adjusting the type and amount of addition of a polar substance, the type and amount of addition of metal alkoxide, reaction start temperature, and reaction end temperature during polymerization.

For example, 2,2-bis(2-oxolanyl)propane can be used as the polar substance to be added during polymerization. In such a case, the molar ratio to a polymerization initiator (polar substance/polymerization initiator) is preferably 0.6 or more and 1.5 or less, more preferably 0.7 or more and 1.2 or less, further preferably 0.75 or more and 1.0 mol or less.

For example, sodium amylate or potassium tert-amylate can be used as the metal alkoxide. In such a case, the molar ratio to the polymerization initiator (metal alkoxide/polymerization initiator) is preferably 0.01 or more and 0.60 or less, more preferably 0.02 or more and 0.40 or less, further preferably 0.02 or more and 0.30 or less.

As the amount of addition of the aromatic vinyl compound is larger during polymerization, the amount of addition of the polar substance is preferably increased and the polar substance and the metal alkoxide are preferably used in combination. In the case of using the above polar substance or metal alkoxide, each of the relative intensities (A), (B), and (C) tends to be easily controlled by controlling the amount of addition within the above range.

Since the conjugated diene compound and the aromatic vinyl compound differ in copolymerizability depending on the type of the polar substance or the metal alkoxide, the amount of addition thereof is preferably controlled according to the above type.

The metal alkoxide tends to have high randomization ability and low vinylation ability. On the other hand, the polar substance containing a heteroatom such as a nitrogen or oxygen atom tends to have both high vinylation ability and high randomization ability. Difference in performance among polar substances containing nitrogen or oxygen depends on the strength of interaction with an active end of the polymer. Stronger interaction enhances vinylation ability and however, easily causes deactivation. In light of such tendencies, polymerization conditions are preferably set according to the above preferable amount of addition.

A polymerization method for the conjugated diene-based polymer of the present embodiment is preferably, but not limited to the following, an adiabatic polymerization scheme.

As for a reaction temperature, the polymerization start temperature is set to preferably 20°C or more and 45°C or less, more preferably 22°C or more and 43°C or less, further preferably 25°C or more and 42°C or less. The polymerization end temperature is preferably 63°C or more, more preferably 65°C or more, further preferably 68°C or more, still further preferably 70°C or more. On the other hand, the polymerization end temperature is preferably 85°C or less, more preferably 83°C or less, further preferably 80°C or less.

Adjustment to the above polymerization start temperature and polymerization end temperature attains favorable productivity in practical use, can control the random polymerizability of the aromatic vinyl monomer unit and the conjugated diene monomer unit, and tends to be able to control the relative intensities (A), (B), and (C) within proper numerical value ranges.

For enhancing the relative intensity (A), for example, it is effective to prepare an aromatic vinyl monomer block using a portion of all aromatic vinyl compounds for use in polymerization. After the aromatic vinyl monomer block is polymerized at an initial stage of polymerization, the conjugated diene compound and the aromatic vinyl compound may be copolymerized, or after the conjugated diene compound and the aromatic vinyl compound are copolymerized, the aromatic vinyl monomer block may be polymerized.

For enhancing the relative intensity (B), for example, it is effective to perform polymerization in a state with a high concentration of a contained aromatic vinyl compound in copolymerizing the aromatic vinyl compound and the conjugated diene compound, to use a polar substance having low randomization ability, or to decrease the amount of addition.

For enhancing the relative intensity (C), for example, it is effective to enhance the randomizability of the aromatic vinyl monomer unit and the conjugated diene monomer unit, to increase the amount of addition of the polar substance, or to lower the reaction temperature.

(Weight average molecular weight)

The weight average molecular weight of the conjugated diene-based polymer of the present embodiment is preferably 150000 or more, more preferably 200000 or more, further preferably 230000 or more, from the viewpoint of reduction in adherence during production and the tensile characteristics of the conjugated diene-based polymer composition of the present embodiment described below.

On the other hand, the weight average molecular weight is preferably 1200000 or less, more preferably 1000000 or less, further preferably 800000 or less, still further preferably 600000 or less, from the viewpoint of processability.

The molecular weight distribution of the conjugated diene-based polymer of the present embodiment is preferably 1.02 or more, more preferably 1.03 or more, further preferably 1.05 or more, from the viewpoint of processability. On the other hand, the molecular weight distribution is preferably 2.5 or less, more preferably 2.0 or less, further preferably 1.8 or less, still further preferably 1.5 or less, from the viewpoint of the balance between the fuel economy performance and grip performance of the conjugated diene-based polymer composition of the present embodiment described below.

The peak top molecular weight of a peak having the largest area in measuring the conjugated diene-based polymer of the present embodiment by gel permeation chromatography (GPC) is 150000 or more, preferably 170000 or more, more preferably 200000 or more, further preferably 220000 or more, from the viewpoint of maneuvering stability when the conjugated diene-based polymer of the present embodiment is used as a material for a tire. On the other hand, the peak top molecular weight is 600000 or less, preferably 550000 or less, more preferably 500000 or less, further preferably 450000 or less, still further preferably 360000 or less, from the viewpoint of processability.

The weight average molecular weight and the molecular weight distribution of the conjugated diene-based polymer of the present embodiment and the peak top molecular weight of the peak having the largest area can be measured by gel permeation chromatography (GPC) and specifically, can be measured by a method described in Examples below.

In relation to the peak having the largest area, in the case of having two or more peaks that have the same area, the peak top molecular weight of a peak having a smaller molecular weight is selected.

The peak top molecular weight is a molecular weight at a point where a slope becomes 0 in differentiating the molecular weight distribution curve of the above peak.

The peak top molecular weight of the peak having the largest area in measuring the conjugated diene-based polymer of the present embodiment by GPC can be controlled within the above numerical value range by adjusting the amount of addition of the polymerization initiator or a coupling agent described below.

(Coupling)

The conjugated diene-based polymer of the present embodiment may be a conjugated diene-based polymer obtained as follows: an active end of a conjugated diene-based polymer obtained through a polymerization step is subjected to coupling reaction using a bifunctional or more reactive compound (hereinafter, also referred to as "coupling agent").

In the coupling reaction step, the coupling reaction is caused at one active end of a conjugated diene-based polymer using a coupling agent to obtain a conjugated diene-based polymer.

Examples of the coupling agent include, but not limited to the following, a coupling agent having one or more functional groups such as an epoxy group, a carbonyl group, a carboxylic acid ester group, a carboxylic acid amide group, an acid anhydride group, a phosphoric acid ester group, a phosphorus acid ester group, an epithio group, a thiocarbonyl group, a thiocarboxylic acid ester group, a dithiocarboxylic acid ester group, a thiocarboxylic acid amide group, an imino group, an ethyleneimino group, a halogen group, an alkoxysilyl group, an isocyanate group, a thioisocyanate group, a conjugated diene group, and an arylvinyl group. Among these coupling agents, a nitrogen atom-containing coupling agent may be exploited as a modifying agent described below.

Examples of the coupling agent include, but not limited to the following, halogenated silane compounds such as silicon tetrachloride, silicon tetrabromide, silicon tetraiodide, monomethyltrichlorosilicon, monoethyltrichlorosilicon, monobutyltrichlorosilicon, monohexyltrichlorosilicon, monomethyltribromosilicon, and bistrichlorosilylethane, and alkoxy halogenated silane compounds such as monochlorotrimethoxysilane, monobromotrimethoxysilane, dichlorodimethoxysilane, dibromodimethoxysilane, trichloromethoxysilane, and tribromomethoxysilane.

Examples thereof also include, but not limited to the following, alkoxysilane compounds such as tetramethoxysilane, tetraethoxysilane, tetrabutoxysilane, and alkyl triphenoxysilane; and compounds having an imino group and an alkoxysilyl group, such as tristrimethoxysilylpropylamine, triethoxysilylpropylamine, N-(1,3-dimethylbutylidene)-3-(triethoxysilyl)-1-propanamine, N-(1,3-dimethylbutylidene)-3-(tributoxysilyl)-1-propanamine, N-(1-methylpropylidene)-3-(triethoxysilyl)-1-propanamine, N-ethylidene-3-(triethoxysilyl)-1-propanamine, and N-(3-triethoxysilylpropyl)-4,5-dihydroimidazole.

Further examples thereof include, but not limited to the following, 2-[3-(trimethoxysilyl)propyl]-1,3-dimethylimidazolidine, 2-[3-(trimethoxysilyl)propyl]-1,3-(bistrimethylsilyl)imidazolidine, 2-(diethoxydiethylsilyl)-1,3-diethylimidazolidine, 2-(triethoxysilyl)-1,4-diethylpiperazine, 2-(dimethoxymethylsilyl)-1,4-dimethylpiperazine, 5-(triethoxysilyl)-1,3-dipropylhexahydropyrimidine, 5-(diethoxyethylsilyl)-1,3-diethylhexahydropyrimidine, {2-[3-(2-dimethylaminoethyl)-2-(ethyldimethoxysilyl)-imidazolidin-1-yl]-ethyl}-dimethylamine, 5-(trimethoxysilyl)-1,3-bis-(2-methoxyethyl)-hexahydropyrimidine, 5-(ethyldimethoxysilyl)-1,3-bis-(2-trimethylsilylethyl)-hexahydropyrimidinyl-1,3-dimethylimidazolidine, 2-(3-diethoxyethylsilyl-propyl)-1,3-diethylimidazolidine, 2-(3-triethoxysilyl-propyl)-1,4-diethylpiperazine, 2-(3-dimethoxymethylsilyl-propyl)-1,4-dimethylpiperazine, 5-(3-triethoxysilyl-propyl)-1,3-dipropylhexahydropyrimidine, 5-(3-diethoxyethylsilyl-propyl)-1,3-diethylhexahydropyrimidine, {2-[3-(2-dimethylaminoethyl)-2-(3-ethyldimethoxysilyl-propyl)-imidazolidin-1-yl]-ethyl}-dimethylamine, 5-(3-trimethoxysilyl-propyl)-1,3-bis-(2-methoxyethyl)-hexahydropyrimidine, 5-(3-ethyldimethoxysilyl-propyl)-1,3-bis-(2-trimethylsilylethyl)-hexahydropyrimidine, 2-[3-(trimethoxysilyl)propyl]-1,3-bis(trimethylsilyl)imidazolidine, 2-(diethoxyethylsilyl)-1,3-bis(triethylsilyl)imidazolidine, 2-(triethoxysilyl)-1,4-bis(trimethylsilyl)piperazine, 2-(dimethoxymethylsilyl)-1,4-bis(trimethylsilyl)piperazine, and 5-(triethoxysilyl)-1,3-bis(tripropylsilyl)hexahydropyrimidine.

Further examples thereof also include, but not limited to the following, [3-(1-hexamethyleneimino)propyl]triethoxysilane, [3-(1-hexamethyleneimino)propyl]trimethoxysilane, [2-(1-hexamethyleneimino)ethyl]triethoxysilane, [2-(1-hexamethyleneimino)ethyl]trimethoxysilane, [3-(1-pyrrolidinyl)propyl]triethoxysilane, [3-(1-pyrrolidinyl)propyl]trimethoxysilane, [3-(1-heptamethyleneimino)propyl]triethoxysilane, [3-(1-dodecamethyleneimino)propyl]triethoxysilane, [3-(1-hexamethyleneimino)propyl]diethoxymethylsisilane, [3-(1-hexamethyleneimino)propyl]diethoxyethylsilane, N-[3-(triethoxysilyl)-propyl]-N,N'-diethyl-N'-trimethylsilyl-ethane-1,2-diamine, N-[2-(trimethoxysilanyl)-ethyl]-N,N',N'-trimethylethane-1,2-diamine, and N,N-bis(trimethylsilyl)aminopropylmethyldiethoxysilane.

Further examples thereof include, but not limited to the following, tetraglycidyl-m-xylenediamine, tetraglycidylaminodiphenylmethane, tetraglycidyl-p-phenylenediamine, diglycidylaminomethylcyclohexane, and tetraglycidyl-1,3-bisaminomethylcyclohexane. Further examples thereof include, but are not limited to, isocyanate compounds such as 2,4-tolylene diisocyanate, 2,6-tolylene diisocyanate, diphenylmethane diisocyanate, diphenylethane diisocyanate, and 1,3,5-benzene triisocyanate.

Examples thereof also include, but not limited to the following, 3-(4-methylpiperazin-1-yl)propyltriethoxysilane, 1-[3-(diethoxyethylsilyl)propyl]-4-methylpiperazine, 1-[3-(trimethoxysilyl)propyl]-3-methylimidazolidine, 1-[3-(diethoxysilyl)propyl]-3-ethylimidazolidine, 1-[3-(triethoxysilyl)propyl]-3-methylhexahydropyrimidine, 1-[3-(dimethoxymethylsilyl)propyl]-3-methylhexahydropyrimidine, 3-[3-(tributoxysilyl)propyl]-1-methyl-1,2,3,4-tetrahydropyrimidine, 3-[3-(dimethoxymethylsilyl)propyl]-1-ethyl-1,2,3,4-tetrahydropyrimidine, 1-(2-ethoxyethyl)-3-[3-(trimethoxysilyl)propyl]imidazolidine, (2-{3-[3-(trimethylsilyl)propyl]tetrahydropyrimidin-yl}ethyl)dimethylamine, 1-[3-(triethoxysilyl)propyl]-4-(trimethylsilyl)piperazine, 1-[3-(dimethoxymethylsilyl)propyl]-4-(trimethylsilyl)piperazine, 1-[3-(tributoxysilyl)propyl]-4-(trimethylsilyl)piperazine, 1-[3-(diethoxyethylsilyl)propyl]-3-(triethylsilyl)imidazolidine, 2-(trimethoxysilanyl)-1,3-dimethylimidazolidine, 1-[3-(triethoxysilyl)propyl]-3-(trimethylsilyl)imidazolidine, 1-[3-(dimethoxymethylsilyl)propyl]-3-(trimethylsilyl)hexahydropyrimidine, 1-[3-(triethoxysilyl)propyl]-3-(trimethylsilyl)hexahydropyrimidine, and 1-[4-(triethoxysilyl)propyl]-4-(trimethylsilyl)piperazine.

(Modification)

The conjugated diene-based polymer of the present embodiment may be modified.

The modification herein is defined as modifying the conjugated diene-based polymer with a compound containing nitrogen.

A modification method is not particularly limited, and examples thereof include a method using a polymerization initiator containing a nitrogen-containing compound, a method using a nitrogen-containing compound as a polymerization monomer, a method using the above nitrogen atom-containing coupling agent, a method of reacting a non-coupling nitrogen-containing compound with an end where reaction is completed, and a method of reacting a nitrogen-containing compound with a double bond of a conjugated diene-based polymer after polymerization to modify the conjugated diene-based polymer.

Examples of the polymerization initiator containing a nitrogen-containing compound include, but not limited to the following, reaction products of a nitrogen-containing compound such as dimethylamine, diethylamine, dibutylamine, dipropylamine, diheptylamine, dihexylamine, dioctylamine, di(2-ethylhexyl)amine, didecylamine, ethylpropylamine, ethylbutylamine, ethylbenzylamine, methylphenethylamine, piperidine, hexamethyleneimine, azacyclooctane, 1,3,3-trimethyl-6-azabicyclo[3.2.1]octane, 1,2,3,6-tetrahydropyridine, or 3,5-dimethylpiperidine, and an organic lithium compound, for example, n-butyllithium, sec-butyllithium, t-butyllithium, n-propyllithium, or i-propyllithium.

Examples of the non-coupling nitrogen-containing compound include, but not limited to the following, 1,3-diethyl-2-imidazolinone, 1,3-dimethyl-2-imidazolinone, 1,3-dipropyl-2-imidazolinone, 1-methyl-3-ethyl-2-imidazolinone, 1-methyl-3-propyl-2-imidazolinone, 1-methyl-3-butyl-2-imidazolinone, and 1,3-dihydro-1,3-dimethyl-2H-imidazol-2-one.

(Degree of modification)

The "degree of modification" herein represents the mass proportion of a polymer having a nitrogen atom-containing functional group based on the total amount of the conjugated diene-based polymer of the present embodiment, unless otherwise specified.

For example, in a case where a nitrogen atom-containing modifying agent is reacted with the terminal end of a polymer before modification, the mass proportion of a polymer having a nitrogen atom-containing functional group provided by the nitrogen atom-containing modifying agent to the total amount of the conjugated diene-based polymer is represented as the degree of modification.

As mentioned above, the nitrogen atom-containing coupling agent is also included in the nitrogen atom-containing modifying agent.

On the other hand, in a case where polymer is branched with a nitrogen atom-containing branching agent, the formed branched polymer also has a nitrogen atom-containing functional group. Thus, this branched polymer is also included as a polymer having a nitrogen atom-containing functional group in counting in the calculation of the degree of modification.

In other words, the polymer having a nitrogen atom-containing functional group herein is a polymer having a nitrogen atom-containing functional group obtained with a nitrogen atom-containing modifying agent and a branched polymer obtained with a branching agent having a nitrogen atom-containing functional group, and the "degree of modification" is the total mass proportion of these polymers.

The degree of modification measured by a column adsorption GPC method (hereinafter, also simply referred to as "degree of modification") in the conjugated diene-based polymer of the present embodiment is preferably 60% or less based on the total amount of the conjugated diene-based polymer from the viewpoint of the balance among the processability, wear resistance, and tensile characteristics at high temperatures of the conjugated diene-based polymer composition of the present embodiment described below.

The degree of modification is preferably 20% or more, more preferably 30% or more, from the viewpoint of improving the wear resistance of the conjugated diene-based polymer composition of the present embodiment. On the other hand, the degree of modification is preferably 60% or less, more preferably 30% or less, further preferably 20% or less, from the viewpoint of processability and tensile characteristics at high temperatures, and a nonmodified form is also accepted.

The degree of modification of the conjugated diene-based polymer of the present embodiment can be measured by, for example, chromatography that can separate a modified component having a nitrogen atom-containing functional group from a nonmodified component having no such nitrogen atom-containing functional group.

Examples of the method using this chromatography include a method including using a column for gel permeation chromatography packed with a polar substance, such as silica, which adsorbs a nitrogen atom-containing functional group, as a filling agent, and performing quantification using an internal standard of a non-adsorbed component in comparison (column adsorption GPC method).

More specifically, the degree of modification can be determined by using a specimen solution containing a specimen and low-molecular weight internal standard polystyrene to measure a chromatogram with polystyrene-based gel column and a chromatogram with a silica-based column and then determine the difference between the chromatograms, and determining the amount of adsorption to the silica column, from the difference.

Further specifically, the degree of modification can be measured by a method described in Examples described below.

The degree of modification of the conjugated diene-based polymer of the present embodiment can be controlled within the above numerical value range by adjustment of, for example, the amount of addition of the modifying agent and a reaction method.

[Method for producing conjugated diene-based polymer]

The conjugated diene-based polymer of the present embodiment is obtained by carrying out a polymerization step of polymerizing an aromatic vinyl compound and a conjugated diene compound using a predetermined polymerization initiator. A coupling reaction step and/or a modification reaction step may be further carried out using the above coupling agent or modifying agent and a hydrogenation step may then be carried out. A branching step using a branching agent may be carried out before the coupling reaction step or the modification step.

(Polymerization step)

An organic monolithium compound, for example, can be used as the polymerization initiator for use in the polymerization step.

Examples of the organic monolithium compound include, but not limited to the following, low molecular organic monolithium compounds and monolithium compounds of solubilized oligomers.

Any of compounds having a carbon-lithium bond, compounds having a nitrogen-lithium bond, and compounds having a tin-lithium bond, in terms of the binding mode between an organic group and lithium therein can be used as the organic monolithium compound, though the organic monolithium compound is not limited thereto.

The amount of use of the organic monolithium compound as the polymerization initiator is preferably determined depending on the structure of a target conjugated diene-based polymer and the molecular weight of the conjugated diene-based polymer.

The amount of use of a monomer such as a conjugated diene compound based on the amount of use of the polymerization initiator influences the degree of polymerization, that is, tends to influence the number average molecular weight and/or weight average molecular weight of the conjugated diene-based polymer, and the peak top molecular weight.

Thus, the amount of use of the polymerization initiator can be adjusted so as to be decreased for increasing the molecular weight of the conjugated diene-based polymer of the present embodiment while the amount of use of the polymerization initiator can be adjusted so as to be increased for decreasing the molecular weight.

The organic monolithium compound is preferably an alkyllithium compound having a substituted amino group, or dialkylaminolithium from the viewpoint of use as an approach of introducing a nitrogen atom to the conjugated diene-based polymer.

In this case, a conjugated diene-based polymer having an amino group-derived nitrogen atom at a polymerization initiation end can be obtained.

The substituted amino group is an amino group having no active hydrogen or having a structure where active hydrogen is protected.

Examples of the alkyllithium compound having the amino group having no active hydrogen include, but not limited to the following, 3-dimethylaminopropyllithium, 3-diethylaminopropyllithium, 4-(methylpropylamino)butyllithium, and 4-hexamethyleneiminobutyllithium.

Examples of the alkyllithium compound having the amino group having a structure where active hydrogen is protected include, but not limited to the following, 3-bistrimethylsilylaminopropyllithium and 4-trimethylsilylmethylaminobutyllithium.

Examples of the dialkylaminolithium include, but not limited to the following, lithium dimethylamide, lithium diethylamide, lithium dipropylamide, lithium dibutylamide, lithium di-n-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenethylamide, lithium hexamethylenimide, lithium pyrrolidide, lithium piperidide, lithium heptamethylenimide, lithium morpholide, 1-lithioazacyclooctane, 6-lithio-1,3,3-trimethyl-6-azabicyclo[3.2.1]octane, and 1-lithio-1,2,3,6-tetrahydropyridine.

The organic monolithium compound having such a substituted amino group may be reacted with a small amount of a polymerizable monomer, for example, a monomer such as 1,3-butadiene, isoprene, or styrene, and used as an organic monolithium compound of a solubilized oligomer.

The organic monolithium compound as the polymerization initiator is preferably an alkyllithium compound from the viewpoint of industrial availability and easy control of polymerization reaction. In this case, a conjugated diene-based polymer having an alkyl group at a polymerization initiation end can be obtained.

Examples of the alkyllithium compound include, but not limited to the following, n-butyllithium, sec-butyllithium, tert-butyllithium, n-hexyllithium, benzyllithium, phenyllithium, and stilbenelithium.

The alkyllithium compound is preferably n-butyllithium and sec-butyllithium from the viewpoint of industrial availability and easy control of polymerization reaction.

The above organic monolithium compounds may be used singly or in combinations of two or more kinds thereof. The polymerization initiator may be used in combination with other organic metal compound(s).

Examples of the other organic metal compound include alkaline earth metal compounds, other alkali metal compounds, and other organic metal compounds.

Examples of the alkaline earth metal compound include, but not limited to the following, organic magnesium compounds, organic calcium compounds, and organic strontium compounds. Examples thereof also include alkoxide, sulfonate, carbonate, and amide compounds of alkaline earth metals.

Examples of the organic magnesium compound include dibutylmagnesium and ethylbutylmagnesium.

Other examples of the organic metal compound include organic aluminum compounds.

Examples of the polymerization reaction mode in the polymerization step include, but not limited to the following, batch and continuous polymerization reaction modes.

In the continuous mode, one reactor or two or more connected reactors can be used. For example, a tank or tubular reactor equipped with a stirrer is used as a reactor for the continuous mode. In the continuous mode, preferably, a monomer, an inert solvent, and a polymerization initiator are continuously fed to the reactor, and a polymer solution containing a conjugated diene-based polymer is obtained in the reactor and a conjugated diene-based polymer solution is continuously discharged.

For example, a tank reactor equipped with a stirrer is used as a reactor for the batch mode. In the batch mode, preferably, a monomer, an inert solvent, and a polymerization initiator are fed, if necessary, the monomer is continuously or intermittently additionally fed during polymerization, and a polymer solution containing a conjugated diene-based polymer is obtained in the reactor and a conjugated diene-based polymer solution is discharged after the completion of polymerization.

In the method for producing the conjugated diene-based polymer of the present embodiment, the continuous mode capable of continuously discharging a conjugated diene-based polymer to be supplied to a next reaction in a short time is preferable for obtaining a conjugated diene-based polymer having an active end at a high ratio.

In the polymerization step for the conjugated diene-based polymer of the present embodiment, the polymerization is preferably performed in an inert solvent. Examples of the inert solvent include, but not limited to the following, hydrocarbon solvents such as saturated hydrocarbons and aromatic hydrocarbons. Specific examples of the hydrocarbon solvent include, but not limited to the following, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and hydrocarbons containing mixtures thereof.

A high concentration of a conjugated diene-based polymer having an active end tends to be obtained by treating impurities allenes and acetylenes with an organic metal compound before polymerization reaction. This is preferable because a conjugated diene-based polymer having a high degree of modification tends to be obtained.

In the polymerization step, a polar substance may be added. The polar compound can thereby randomly copolymerize an aromatic vinyl compound and a conjugated diene compound. The polar substance can also be used as a vinylating agent for controlling the microstructure of a conjugated diene moiety. The polar compound tends to be also effective for accelerating polymerization reaction, for example.

Examples of the polar substances here include, but not limited to the following, an ether compound such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, or 2,2-bis(2-oxolanyl)propane; a tert-amine compound such as tetramethylethylenediamine, dipiperidinoethane, trimethylamine, triethylamine, pyridine, or quinuclidine; an alkali metal alkoxide compound such as potassium-tert-amylate, potassium-tert-butyrate, sodium-tert-butyrate, or sodium amylate; or a phosphine compound such as triphenylphosphine.

These polar substances may be used singly or in combinations of two or more kinds thereof.

The amount of use of the polar substance is not particularly limited, can be selected depending on the object and the like, and is preferably 0.01 mol or more and 10 mol or less per mol of the polymerization initiator.

In the case of using such a polar substance as a vinylating agent, the polar substance can be used, as an adjuster for the microstructure of a conjugated diene moiety in the conjugated diene-based polymer, in an appropriate amount according to the desired amount of 1,2-vinyl bond. Most of the polar substances tend to have an effective randomization effect for the copolymerization of a conjugated diene compound and an aromatic vinyl compound and to be able to be used as an adjuster for the distribution of the aromatic vinyl compound and the amount of aromatic vinyl monomer block, at the same time.

Examples of the method include a method including initiating copolymerization reaction with the whole amount of styrene and an aliquot of 1,3-butadiene and intermittently adding the remaining amount of 1,3-butadiene during the copolymerization reaction, as described in Japanese Patent Laid-Open No. 59-140211, as the method for randomizing a conjugated diene compound and an aromatic vinyl compound.

The polymerization temperature in the polymerization step is preferably a temperature at which living anion polymerization proceeds, and is more preferably 0°C or more, further preferably 120°C or less, still further preferably 30°C or more and 100°C or less, from the viewpoint of productivity. The polymerization temperature within such a range tends to be able to sufficiently ensure the amount of reaction of a modifying agent with an active end after the completion of polymerization.

(Coupling step, modification step, and hydrogenation step)

Coupling reaction with the above coupling agent or modification reaction with the nitrogen atom-containing modifying agent may be performed at an active end of the conjugated diene-based polymer obtained through the above polymerization step, and, if necessary, a branching step using a predetermined branching agent. In the case of using a nitrogen atom-containing coupling agent, coupling reaction and modification reaction proceed at the same time. A hydrogenation step of performing hydrogenation reaction may be appropriately carried out.

(Deactivator addition step and neutralizer addition step)

In the method for producing the conjugated diene-based polymer of the present embodiment, a deactivator, a neutralizer, and/or the like may also be, if necessary, added to a polymer solution.
Examples of the deactivator include, but not limited to the following, water; and alcohols such as methanol, ethanol, and isopropanol.
Examples of the neutralizer include, but not limited to the following, carboxylic acids such as stearic acid, oleic acid, and versatic acid (mixture of carboxylic acids having 9 to 11 carbon atoms, mainly having 10 carbon atoms, and having many branches); aqueous inorganic acid solutions, and carbon dioxide.

(Stabilizer for rubber)

In the method for producing the conjugated diene-based polymer of the present embodiment, a stabilizer for rubber is preferably added from the viewpoint of preventing gel formation after polymerization and from the viewpoint of improving stability during processing.
The stabilizer for rubber is not limited to the following and any known stabilizer can be used. Examples thereof include antioxidants such as 2,6-di-tert-butyl-4-hydroxytoluene (hereinafter, also designated as "BHT".), n-octadecyl-3-(4'-hydroxy-3',5'-di-tert-butylphenol)propinate, and 2-methyl-4,6-bis[(octylthio)methyl]phenol.

(Solvent removal step)

In the method for producing the conjugated diene-based polymer of the present embodiment, a known method can be used as the method for acquiring the obtained conjugated diene-based polymer from the polymer solution. Examples of the method include, but not limited to the following, a method including separating a solvent by steam stripping or the like, thereafter separating the polymer by filtration, and furthermore performing dewatering and drying to acquire the polymer, a method including concentration in a flushing tank and furthermore devolatilization by a vented extruder or the like, and a method including direct devolatilization by a drum dryer or the like.

[Conjugated diene-based polymer composition]

The conjugated diene-based polymer composition of the present embodiment contains the above conjugated diene-based polymer of the present embodiment.
The conjugated diene-based polymer composition of the present embodiment preferably contains 10 parts by mass or more, more preferably 15 parts by mass or more, of a filling agent based on 100 parts by mass of the conjugated diene-based polymer of the present embodiment. On the other hand, the content of the filling agent is preferably 250 parts by mass or less, more preferably 200 parts by mass or less, further preferably 150 parts by mass or less, based on 100 parts by mass of the conjugated diene-based polymer of the present embodiment from the viewpoint of sufficient dispersion of the filling agent and sufficient processability and mechanical strength in practical use of the conjugated diene-based polymer composition of the present embodiment.

(Filling agent)

Examples of the filling agent include, but not limited to the following, silica-based inorganic filling agents, carbon black, calcium carbonate, titanium oxide, aluminum hydroxide, and clay. These may be used singly or in combinations of two or more kinds thereof.
Other filling agent(s) may be further contained.
The silica-based inorganic filling agent is not limited to the following, known one can be used, for example, a solid particle including $SiO_2$ or $Si_3Al$ as a constituent unit is preferable, and a solid particle including $SiO_2$ or $Si_3Al$ as a main component of a constituent unit is more preferable. The main component herein refers to a component contained in the silica-based inorganic filling agent at a content of 50% by mass or more, preferably 70% by mass or more, more preferably 80% by mass or more.

Specific examples of the silica-based inorganic filling agent include, but not limited to the following, silica, clay, talc, mica, diatomaceous earth, wollastonite, montmorillonite, zeolite, and inorganic fibrous substances such as glass fibers.

Any of silica-based inorganic filling agents subjected to surface hydrophobization, and mixtures of the silica-based inorganic filling agent and an inorganic filling agent other than the silica-based inorganic filling agent may be used as the silica-based inorganic filling agent.

In particular, the silica-based inorganic filling agent is preferably silica or glass fiber, more preferably silica from the viewpoint of the strength and wear resistance, etc. of the conjugated diene-based polymer composition of the present embodiment. Examples of the silica include dry silica, wet silica, and synthetic silicate silica.

Examples of the carbon black include, but not limited to the following, carbon black in each class, such as SRF, FEF, HAF, ISAF, and SAF. In particular, the carbon black preferably has a nitrogen adsorption specific surface area of 50 $m^2/g$ or more and an amount of dibutyl phthalate (DBP) oil absorption of 80 mL/100 g or less.

The content of the carbon black in the conjugated diene-based polymer composition of the present embodiment is preferably 5 parts by mass or more and 150 parts by mass or less, more preferably 10 parts by mass or more and 120 parts by mass or less, further preferably 15 parts by mass or more and 100 parts by mass or less, based on 100 parts by mass of the above conjugated diene-based polymer of the present embodiment. The content of the carbon black within the above range tends to impart excellent breaking strength, compression set, and hardness to the conjugated diene-based polymer composition of the present embodiment.

Preferable examples of the calcium carbonate include, but not limited to the following, calcium carbonate having an average particle size of 0.04 μm to 8.0 μm and an amount of oil absorption of 10 to 35 g per 100 g of the calcium carbonate.

The filling agent for use in the conjugated diene-based polymer composition of the present embodiment can also include a filling agent other than the above various filling agents. Examples of the above other filling agent include metal oxide and metal hydroxide.

The metal oxide refers to a solid particle of a constituent unit mainly of chemical formula: $M_xO_y$ (M represents a metal atom, and x and y each independently represent an integer of 1 to 6).

Examples of the metal oxide include, but not limited to the following, alumina, titanium oxide, magnesium oxide, and zinc oxide.

Examples of the metal hydroxide include, but not limited to the following, aluminum hydroxide, magnesium hydroxide, and zirconium hydroxide.

(Silane coupling agent)

The conjugated diene-based polymer composition of the present embodiment may contain a silane coupling agent.

The silane coupling agent has a function of tightening the interaction between the conjugated diene-based polymer and the filling agent.

The silane coupling agent has a group having affinity with or being bindable to each of the conjugated diene-based polymer and the silica-based inorganic filling agent, and is preferably a compound having a sulfur-binding portion and an alkoxysilyl group or a silanol group portion in one molecule.

Such a compound is not limited to the following, and examples thereof include bis-[3-(triethoxysilyl)-propyl]-tetrasulfide, bis-[3-(triethoxysilyl)-propyl]-disulfide, and bis-[2-(triethoxysilyl)-ethyl]-tetrasulfide.

The content of the silane coupling agent in the conjugated diene-based polymer composition of the present embodiment is preferably 0.1 parts by mass or more and 30 parts by mass or less, more preferably 0.5 parts by mass or more and 20 parts by mass or less, further preferably 1.0 part by mass or more and 15 parts by mass or less, based on 100 parts by mass of the above filling agent. When the content of the silane coupling agent falls within the above range, the above effects brought about by the addition of the silane coupling agent tend to be able to be more remarkable.

(Softener for rubber)

The conjugated diene-based polymer composition of the present embodiment may optionally contain a softener for rubber.

The softener for rubber may be contained in the conjugated diene-based polymer in advance or may be added to the conjugated diene-based polymer composition. The softener for rubber is preferably added from the viewpoint of improving the cohesion of the conjugated diene-based polymer, suppressing powder formation, improving the productivity of the conjugated diene-based polymer, and more improving the processability of the conjugated diene-based polymer composition blended with the filling agent or the like.

Examples of the softener for rubber include, but not limited to the following, spreading oil, liquid rubber, and resins.

The method for adding the softener for rubber to the conjugated diene-based polymer constituting the conjugated diene-based polymer composition is, but not limited to the following, preferably a method including adding and mixing the softener for rubber to and with a conjugated diene-based polymer solution, to provide a polymer solution containing the softener for rubber, and performing solvent removal from the polymer solution.

Examples of the spreading oil include, but not limited to the following, aromatic oil, naphthene oil, and paraffin oil. In particular, alternative oil to aromatic oil is preferable, which contains 3% by mass or less of a polycyclic aromatic (PCA) component according to the IP346 method, from the viewpoint of environment safety and from the viewpoint of oil bleed prevention and wet grip properties. Examples of the alternative oil to aromatic oil include not only TDAE (Treated Distillate Aromatic Extracts) and MES (Mild Extraction Solvate) shown in Kautschuk Gummi Kunststoffe52 (12) 799 (1999), but also RAE (Residual Aromatic Extracts).

Examples of the liquid rubber include, but not limited to the following, liquid polybutadiene and liquid styrene-butadine rubber.

Examples of the effect by addition of the liquid rubber include not only an effect of improving the processability of a conjugated diene-based polymer composition containing the conjugated diene-based polymer and the filling agent or the like, but an effect of being able to shift the glass transition temperature of the conjugated diene-based polymer composition to the lower temperature and thereby improve the wear resistance and low temperature characteristics of a vulcanized product.

Examples of the resin include, but not limited to the following, aromatic petroleum resins, coumarone-indene resins, terpene-based resins, rosin derivatives (including wood oil resins), tall oil, tall oil derivatives, rosin ester resins, natural and synthetic terpene resins, aliphatic hydrocarbon resins, aromatic hydrocarbon resins, mixed aliphatic-aromatic hydrocarbon resins, coumarin-indene resins, phenol resins, p-tert-butylphenol-acetylene resins, phenol-formaldehyde resins, xylene-formaldehyde resins, monoolefin oligomers, diolefin oligomers, hydrogenated aromatic hydrocarbon resins, cyclic aliphatic hydrocarbon resins, hydrogenated aliphatic hydrocarbon resins, hydrogenated wood oil resins, hydrogenated oil resins, and esters of hydrogenated oil resins and monofunctional or multifunctional alcohols.

These resins may be used singly or in combinations of two or more kinds thereof. In the case of hydrogenation, all unsaturated groups may be hydrogenated, or some unsaturated groups may remain.

Examples of the effect by addition of the resin include an effect of being able to improve the processability of a conjugated diene-based polymer composition obtained by blending the conjugated diene-based polymer of the present embodiment with the filling agent or the like, and an effect of being able to improve the fracture strength of a vulcanized product formed, and furthermore, and also include an effect of being able to shift the glass transition temperature of the conjugated diene-based polymer composition of the present embodiment to the higher temperature and thereby improve tensile characteristics at high temperatures.

The amount of addition of the spreading oil, the liquid rubber, or the resin as the softener for rubber is preferably 1 part by mass or more and 60 parts by mass or less, more preferably 5 parts by mass or more and 50 parts by mass or less, further preferably 10 parts by mass or more and 37.5 parts by mass or less, based on 100 parts by mass of the conjugated diene-based polymer of the present embodiment.

The softener for rubber, when added within the above range, tends to provide an improvement in processability of a conjugated diene-based polymer composition obtained by blending the conjugated diene-based polymer of the present embodiment with the filling agent or the like and improvement in fracture strength and wear resistance of a vulcanized product formed.

(Other additives)

The conjugated diene-based polymer composition of the present embodiment may contain various additives other than those described above, such as other softener and filling agent, and a heat-resistant stabilizer, an antistatic agent, a weathering stabilizer, an anti-aging agent, a colorant, a lubricant, and a tackifier as long as the objects of the present embodiment are not impaired.

A known softener can be used as such other softener.

Such other filling agent is not particularly limited, and specific examples thereof include magnesium carbonate, aluminum sulfate, and barium sulfate. The above heat-resistant stabilizer, antistatic agent, weathering stabilizer, anti-aging agent, colorant, and lubricant here used can be each known material.

(Method for producing conjugated diene-based polymer composition)

The conjugated diene-based polymer composition of the present embodiment can be produced by mixing the conjugated diene-based polymer of the present embodiment, if necessary, with the above filling agent, silane coupling agent, and softener for rubber, other additives, and the like.

Examples of the mixing method include, but not limited to the following, a melt-kneading method with a common mixing machine such as an open roll, a Bunbury mixer, a kneader, a monoaxial screw extruder, a biaxial screw extruder, or a multiaxial screw extruder, and a method including removing a solvent by heating even after dissolving and mixing each component.

In particular, a melt-kneading method with a roll, a Bunbury mixer, a kneader, or an extruder is preferable from the viewpoint of productivity and good kneading properties. Either a method including kneading the conjugated diene-based polymer of the present embodiment, the filling agent, the silane coupling agent, and additives at once or a method including dividing and mixing such materials in multiple portions can also be applied.

[Rubber bale formed body]

The conjugated diene-based polymer of the present embodiment can be prepared as a rubber bale formed body.

The rubber bale formed body is a clumped form of the conjugated diene-based polymer obtained by compression molding and is obtained, for example, by extruding the conjugated diene-based polymer in an extruder, cutting the extrudate to obtain a crumb, and compression-molding the crumb.

[Vulcanized composition]

The conjugated diene-based polymer composition of the present embodiment may be subjected to vulcanization treatment with a vulcanizing agent to prepare a vulcanized composition.

Examples of the vulcanizing agent include, but not limited to the following, radical generators such as organic peroxide and azo compounds, oxime compounds, nitroso compounds, polyamine compounds, sulfur, and sulfur compounds.

Such sulfur compounds include sulfur monochloride, sulfur dichloride, disulfide compounds, and polymer polysulfide compounds.

The content of the vulcanizing agent in the vulcanized composition of the present embodiment is preferably 0.01 parts by mass or more and 20 parts by mass or less, more preferably 0.1 parts by mass or more and 15 parts by mass or less, based on 100 parts by mass of the rubber component including the conjugated diene-based polymer of the present embodiment. A conventionally known method can be applied to the vulcanization method. The vulcanization temperature is preferably 120°C or more and 200°C or less, more preferably 140°C or more and 180°C or less.

For the vulcanization, a vulcanization accelerator may be used, if necessary.

A conventionally known material can be used as the vulcanization accelerator, and examples include, but not limited to the following, sulfenamide-based, guanidine-based, thiuram-based, aldehyde-amine-based, aldehyde-ammonia-based, thiazole-based, thiourea-based, and dithiocarbamate-based vulcanization accelerators. Examples of the vulcanization aid include, but not limited to the following, zinc flower, stearic acid, and triallyl isocyanurate.

The content of the vulcanization accelerator is preferably 0.01 parts by mass or more and 20 parts by mass or less, more preferably 0.1 parts by mass or more and 15 parts by mass or less, based on 100 parts by mass of the rubber component including the conjugated diene-based polymer of the present embodiment.

Examples of the organic peroxide include, but not limited to the following, 1,3-bis(tert-butylperoxyisopropyl) benzene, 2,5-dimethyl-2,5-bis(tert-butylperoxy)hexine-3, 2,5-dimethyl-2,5-bis(tert-butylperoxy)hexene-3, 2,5-dimethyl-2,5-bis(tert-butylperoxy)hexane, 2,2'-bis(tert-butylperoxy)-p-isopropylbenzene, dicumyl peroxide, di-tert-butyl peroxide, tert-butyl peroxide, p-menthane peroxide, 1,1-bis(tert-butylperoxy)-3,3,5-trimethylcyclohexane, dilauroyl peroxide, diacetyl peroxide, tert-butyl peroxybenzoate, 2,4-dichlorobenzoyl peroxide, p-chlorobenzoyl peroxide, benzoyl peroxide, di(tert-butylperoxy)perbenzoate, n-butyl-4,4-bis(tert-butylperoxy)valerate, and tert-butyl peroxyisopropylcarbonate.

Examples of the conjugated diene-based polymer composition of the present embodiment include compositions for tires, compositions for shoe soles, compositions for a vibration isolation rubber, rubber compositions for vibration control materials, rubber compositions for rubber belts, and compositions for automobile interiors.

## Examples

Hereinafter, the present embodiment is described in more detail with reference to specific Examples and Comparative Examples, and Application Examples and Application Comparative Examples, but the present embodiment is not limited by the following Examples and Comparative Examples, and Application Examples and Application Comparative Examples at all.

Here, specific examples of the conjugated diene-based polymer were used as "Examples" and "Comparative Examples", and specific examples of the conjugated diene-based polymer composition were used as "Application Examples" and "Application Comparative Examples".

Various physical properties in Examples and Comparative Examples, and Application Examples and Application Comparative Examples were measured by methods shown below.

[Methods for measuring physical properties]

[Peak top molecular weight of a peak having the largest area in the molecular weight distribution curve of GPC]

The peak top molecular weight of the peak having the largest area was determined based on the calibration curve with standard polystyrene, by measuring a chromatogram with a GPC measurement apparatus where three columns each including polystyrene-based gel as a filling agent were connected.

Specific measurement conditions are shown below.

Twenty μL of the following measurement liquid was injected to the GPC measurement apparatus to perform such measurement.

(Measurement conditions)

Apparatus: trade name "HLC-8320GPC" manufactured by Tosoh Corporation

Eluent: 5 mmol/L triethylamine-containing tetrahydrofuran (THF)

Guard column: trade name "TSK guard column Super H-H" manufactured by Tosoh Corporation

Separation column: trade names "TSK gel Super H5000", "TSK gel Super H6000", and "TSK gel Super H7000" manufactured by Tosoh Corporation, connected in the listed order.

Oven temperature: 40°C

Flow rate: 0.6 mL/min

Detector: RI detector (trade name "HLC8020" manufactured by Tosoh Corporation)

Measurement liquid: measurement solution of 10 mg of each measurement specimen dissolved in 20 mL of THF

[Degree of modification]

The degree of modification was measured as follows according to a column adsorption GPC method, by use of the property of a modified conjugated diene-based polymer to adsorb to a column.

The degree of modification was determined using a specimen solution containing a specimen and low-molecular weight internal standard polystyrene to measure a chromatogram with a column packed with polystyrene-based gel and a chromatogram with a column packed with silica-based gel and then determine the difference between the chromatograms, and determining the amount of adsorption to the silica-based column, from the difference.

(GPC measurement conditions with polystyrene-based column)

GPC measurement conditions with the polystyrene-based column are shown below. Twenty μL of the following measurement liquid was injected to the GPC measurement apparatus to perform such measurement.

Apparatus: trade name "HLC-8320GPC" manufactured by Tosoh Corporation

Eluent: 5 mmol/L triethylamine-containing THF

Guard column: trade name "TSK guard column Super H-H" manufactured by Tosoh Corporation

Column: trade names "TSK gel Super H5000", "TSK gel Super H6000", and "TSK gel Super H7000" manufactured by Tosoh Corporation, connected in the listed order.

Oven temperature: 40°C

Flow rate: 0.6 mL/min

Detector: RI detector (HLC8020 manufactured by Tosoh Corporation)

Measurement liquid: specimen solution obtained by dissolving 10 mg of specimen and 5 mg of standard polystyrene in 20 mL of THF.

(GPC measurement conditions with silica-based column)

GPC measurement conditions with the silica-based column are shown below. Fifty μL of the following measurement liquid was injected to the GPC measurement apparatus to perform such measurement.

Apparatus: trade name "HLC-8320GPC" manufactured by Tosoh Corporation

Eluent: THF

Guard column: trade name "DIOL 4.6 × 12.5 mm 5 micron" manufactured by GL Sciences Inc.

Separation column: trade names "Zorbax PSM-1000S", "PSM-300S", and "PSM-60S" manufactured by Agilent Technologies, connected in the listed order.

Oven temperature: 40°C

Flow rate: 0.5 mL/min

Detector: RI detector (HLC8020 manufactured by Tosoh Corporation)

(Method for calculating degree of modification):

The degree of modification (%) was determined by the following expression, in which the peak area of the specimen was designated as P1 and the peak area of standard polystyrene was designated as P2 under the assumption that the entire peak area of the chromatogram with the polystyrene-based column was 100, and the peak area of the specimen was designated as P3 and the peak area of standard polystyrene was designated as P4 under the assumption that the entire peak area of the chromatogram with the silica-based column was 100.

$$\text{Degree of modification (\%)} = [1 - (P2 \times P3)/(P1 \times P4)] \times 100$$

(wherein P1 + P2 = P3 + P4 = 100)

[Degree of coupling]

Each chromatogram was measured in the same manner as the above method for measuring the peak top molecular weight of a peak having the largest area in the molecular weight distribution curve of GPC, and in the case of two or more peaks, the degree of coupling was calculated from the ratio between the peak area as signed to no coupling (peak at the lower molecular weight side) and the peak area as signed to coupling (peak at the higher molecular weight side).

In the case of one peak, the degree of coupling is regarded as 0%. In the case of three or more peaks, a peak at the lowest molecular weight is regarded as the peak of an uncoupled component, and peaks at the higher molecular weight side than that of the peak are regarded as the peaks of coupled components.

The peak in the present Examples is a portion that has the maximum value in GPC measurement and sandwiched between baselines or minimum values, and means that a peak molecular weight at the maximum value is 10000 or more and peak area is 5% or more.

[Mooney viscosity]

The Mooney viscosity of each polymer was measured with a Mooney viscometer (trade name "VR1132" manufactured by Ueshima Seisakusho Co., Ltd.), according to JIS K6300 (ISO289-1) and ISO289-4. The measurement temperature was 100°C.

Here, each specimen was preheated for 5 minute, thereafter a rotor was rotated at 2 rpm, and the torque after 4 minutes was measured and defined as the Mooney viscosity ($ML_{(5+4)}$).

[Content of aromatic vinyl monomer unit (amount of bound styrene), amount of 1,2-vinyl bond, relative intensity at 6.0 ppm or more and less than 6.7 ppm, relative intensity at 6.7 ppm or more and less than 6.94 ppm, relative intensity at 6.94 ppm or more and 7.60 ppm or less in conjugated diene-based polymer]

The amount of bound styrene, the amount of 1,2-vinyl bond, and (A) a relative intensity at 6.0 ppm or more and less than 6.7 ppm, (B) a relative intensity at 6.7 ppm or more and less than 6.94 ppm, and (C) a relative intensity at 6.94 ppm or more and 7.60 pp or less were measured by $^1$H-NMR measurement using the conjugated diene-based polymer as a sample.

$^1$H-NMR measurement conditions are noted below.

<Measurement conditions>

Measurement equipment: JNM-LA400 (manufactured by JEOL Ltd.)

Solvent: deuterated chloroform

Measurement sample: conjugated diene-based polymer

Sample concentration: 50 mg/mL

Observation frequency: 400 MHz

Chemical shift reference: 0.05% by mass of TMS (tetramethylsilane) contained based on deuterated chloroform

Pulse delay: 2.904 seconds

Number of scanning times: 64

Pulse width: 45°

Measurement temperature: 26°C

[Production of conjugated diene-based polymer]

(Example 1) Conjugated diene-based polymer 1

As shown in Table 1, a temperature-controllable autoclave having an inner volume of 40 L, equipped with a stirrer and a jacket, was used as a reactor, 1,470 g of 1,3-butadiene, 1330 g of styrene (initial styrene in the table), 21,000 g of cyclohexane, and 0.5 mol of tetrahydrofuran (THF) and 14.1 mmol of 2,2-bis(2-oxolanyl)propane as polar substances, from which impurities were removed in advance, were placed in the reactor, and the temperature in the reactor was kept at 33°C.

To the reactor was fed 16.5 mmol of n-butyllithium (in the table, referred to as nBL) as a polymerization initiator.

After the initiation of polymerization reaction, the temperature in the reactor was raised due to heat generation by polymerization, and the temperature rise was confirmed to become 0.3°C/min or less. 200 g of styrene (further added styrene in the table) was further added and further reacted. The final temperature in the reactor was 81°C. To the polymer solution was added 14.9 mmol of methanol as a reaction terminator.

To the polymer solution were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter the conjugated diene-based polymer solution was dropped into warm water to remove the solvent, and subjected to a drying treatment with a drier, and a conjugated diene-based polymer 1 (in the table 1 below, referred to as polymer 1) was thus obtained.

The results of analysis on the obtained conjugated diene-based polymer 1 by the above methods are shown in Table 4.

(Examples 2 to 15, and Comparative Examples 1 to 12) Conjugated diene-based polymer 2 to 15, and 19 to 30

Each conjugated diene-based polymer (conjugated diene-based polymers 2 to 15 and 19 to 30) was obtained by the same method as in Example 1 except that, as shown in Tables 1 to 3, the polymerization prescription was changed.
To each conjugated diene-based polymer solution thus obtained were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter each conjugated diene-based polymer solution was dropped into warm water to remove the solvent, and subjected to a drying treatment with a drier, and each conjugated diene-based polymer (in the tables below, referred to as polymers 2 to 15 and 19 to 30) was thus obtained.
The results of analysis on the obtained conjugated diene-based polymers 2 to 15 and 19 to 30 by the above methods are shown in Tables 4 to 6.

(Example 16) Conjugated diene-based polymer 16

As shown in Table 2, a temperature-controllable autoclave having an inner volume of 40 L, equipped with a stirrer and a jacket, was used as a reactor, 1,560 g of 1,3-butadiene, 1260 g of styrene (initial styrene in the table), 21,000 g of cyclohexane, and 0.73 mol of tetrahydrofuran (THF), 18.2 mmol of 2,2-bis(2-oxolanyl)propane, and 1.2 mol of potassium tert-amylate as polar substances, from which impurities were removed in advance, were placed in the reactor, and the temperature in the reactor was kept at 33°C.
To the reactor was fed 24.3 mmol of n-butyllithium as a polymerization initiator.
After the initiation of polymerization reaction, the temperature in the reactor was raised due to heat generation by polymerization, and the temperature rise was confirmed to become 0.3°C/min or less. 180 g of styrene (further added styrene in the table) was further added and further reacted. The final temperature in the reactor was 80°C. To the polymer solution was added 2.4 mmol of 2,2-dimethoxy-1-(3-trimethoxysilylpropyl)-1-aza-2-silacyclopentane (compound 1) as a coupling agent to cause reaction for 15 minutes. Then, 19.0 mmol of methanol was added as a reaction terminator.
To the obtained polymer solution were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter the conjugated diene-based polymer solution was dropped into warm water to remove the solvent, and subjected to a drying treatment with a drier, and a conjugated diene-based polymer 16 (in the table 2 below, referred to as polymer 16) was thus obtained.
The results of analysis on the obtained conjugated diene-based polymer 16 by the above methods are shown in Table 5.

(Examples 17 and 18) Conjugated diene-based polymers 17 and 18

Each conjugated diene-based polymer (conjugated diene-based polymers 17 and 18) was obtained by the same method as in Example 16 except that, as shown in Table 2, the polymerization prescription was changed.
To the solutions of conjugated diene-based polymers 17 and 18 thus obtained were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter each conjugated diene-based polymer solution was dropped into warm water to remove the solvent, and subjected to a drying treatment with a drier, and each conjugated diene-based polymer (in the table 2 below, referred to as polymers 17 and 18) was thus obtained.
The results of analysis on the obtained conjugated diene-based polymers 17 and 18 by the above methods are shown in Table 5.
The symbols in Tables 1 to 3 below are given below.

THF: tetrahydrofuran
BOP: 2,2-bis(2-oxolanyl)propane
KTA: potassium tert-amylate
KDO: K-3,7-dimethyl-3-octylate (50% in hexane)
EMP: 2-(2-ethoxyethoxy)-2-methylpropane
EGDE: ethylene glycol diethyl ether
NaTA: sodium-tert-amylate
Compound 1: 2,2-dimethoxy-1-(3-trimethoxysilylpropyl)-1-aza-2-silacyclopentane
Compound 2: tetramethoxysilane

[Table 1]

| | | | Example 1 | Example 2 | Example 3 | Example 4 | Example 5 | Example 6 | Example 7 | Example 8 | Example 9 |
|---|---|---|---|---|---|---|---|---|---|---|---|
| | Conjugated diene-based polymer | | Polymer 1 | Polymer 2 | Polymer 3 | Polymer 4 | Polymer 5 | Polymer 6 | Polymer 7 | Polymer 8 | Polymer 9 |
| Monomer | Initial styrene | g | 1330 | 1620 | 1845 | 1460 | 1140 | 880 | 1180 | 1410 | 1240 |
| | Further added styrene | g | 200 | 0 | 0 | 400 | 0 | 200 | 200 | 0 | 500 |
| | Butadiene | g | 1470 | 1380 | 1155 | 1140 | 1860 | 1920 | 1620 | 1590 | 1260 |
| Solvent | Cyclohexane | g | 21000 | 21000 | 21000 | 21000 | 21000 | 21000 | 21000 | 21000 | 21000 |
| Polar substance | THF | mol | 0.50 | 0.40 | 0.45 | 0.45 | 0.56 | 0.53 | 0.63 | 0.44 | 0.48 |
| | BOP | mmol | 14.1 | 11.4 | 12.8 | 12.7 | 12.2 | 2.5 | 4.2 | 2.2 | 1.6 |
| | KTA | mmol | 0 | 1.1 | 1.2 | 0.7 | 0.9 | 0.9 | 1.0 | 0.9 | 0 |
| | KDO | mmol | 0 | 0 | 0 | 0 | 0 | 0 | 0 | 0 | 0 |
| | EMP | mmol | 0 | 0 | 0 | 0 | 0 | 0 | 0 | 0 | 0 |
| | EGDE | mmol | 0 | 0 | 0 | 0 | 0 | 0 | 0 | 0 | 0 |
| | NaTA | mmol | 0 | 0 | 0 | 0 | 0 | 0 | 0 | 0 | 0 |
| Polymerization initiator | nBL | mmol | 16.5 | 13.4 | 15.1 | 15.0 | 18.7 | 17.6 | 21.0 | 14.6 | 16.1 |
| Coupling agent | Compound 1 | mmol | 0 | 0 | 0 | 0 | 0 | 0 | 0 | 0 | 0 |
| | Compound 2 | mmol | 0 | 0 | 0 | 0 | 0 | 0 | 0 | 0 | 0 |
| Polymerization terminator | Methanol | mmol | 18 | 15 | 17 | 16 | 21 | 19 | 23 | 16 | 18 |
| Polymerization temperature | Polymerization start temperature | °C | 33 | 30 | 30 | 35 | 30 | 33 | 33 | 30 | 35 |
| | Polymerization end temperature | °C | 81 | 83 | 83 | 78 | 81 | 74 | 74 | 77 | 72 |

[Table 2]

| | | | Example 10 | Example 11 | Example 12 | Example 13 | Example 14 | Example 15 | Example 16 | Example 17 | Example 18 |
|---|---|---|---|---|---|---|---|---|---|---|---|
| | Conjugated diene-based polymer | | Polymer 10 | Polymer 11 | Polymer 12 | Polymer 13 | Polymer 14 | Polymer 15 | Polymer 16 | Polymer 17 | Polymer 18 |
| Monomer | Initial styrene | g | 1195 | 1350 | 1800 | 1140 | 1290 | 1080 | 1260 | 1260 | 1260 |
| | Further added styrene | g | 200 | 600 | 0 | 0 | 0 | 0 | 180 | 180 | 180 |
| | Butadiene | g | 1605 | 1050 | 1200 | 1860 | 1710 | 1920 | 1560 | 1560 | 1560 |
| Solvent | Cyclohexane | g | 21000 | 21000 | 21000 | 21000 | 21000 | 21000 | 21000 | 21000 | 21000 |
| Polar substance | THF | mol | 0.54 | 0.60 | 0.69 | 0.73 | 0.44 | 0.42 | 0.73 | 0.73 | 1.07 |
| | BOP | mmol | 8.7 | 17.0 | 2.8 | 1.0 | 12.2 | 11.1 | 18.2 | 18.3 | 24.3 |
| | KTA | mmol | 0.5 | 0 | 1.8 | 1.2 | 0.7 | 1.0 | 1.2 | 1.2 | 1.6 |
| | KDO | mmol | 0 | 0 | 0 | 0 | 0 | 0 | 0 | 0 | 0 |
| | EMP | mmol | 0 | 0 | 0 | 0 | 0 | 0 | 0 | 0 | 0 |
| | EGDE | mmol | 0 | 0 | 0 | 0 | 0 | 0 | 0 | 0 | 0 |
| | NaTA | mmol | 0 | 0 | 0 | 0 | 0 | 0 | 0 | 0 | 0 |
| Polymerization initiator | nBL | mmol | 10.8 | 20.0 | 23.0 | 24.4 | 14.3 | 13.0 | 24.3 | 24.3 | 32.4 |
| Coupling agent | Compound 1 | mmol | 0 | 0 | 0 | 0 | 0 | 0 | 2.4 | 0 | 4 |
| | Compound 2 | mmol | 0 | 0 | 0.0 | 0.0 | 0.0 | 0.0 | 0 | 4.9 | 0.0 |
| Polymerization terminator | Methanol | mmol | 12 | 22 | 25 | 27 | 16 | 14 | 19 | 12 | 13 |
| Polymerization temperature | Polymerization start temperature | °C | 33 | 35 | 30 | 30 | 30 | 30 | 33 | 33 | 33 |
| | Polymerization end temperature | °C | 80 | 77 | 76 | 79 | 72 | 74 | 80 | 80 | 80 |

[Table 3]

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|
| | Conjugated diene-based polymer | | Polymer 19 | Polymer 20 | Polymer 21 | Polymer 22 | Polymer 23 | Polymer 24 | Polymer 25 | Polymer 26 | Polymer 27 | Polymer 28 | Polymer 29 | Polymer 30 |
| Monomer | Initial styrene | g | 700 | 2050 | 1380 | 580 | 730 | 1180 | 380 | 1180 | 1180 | 1650 | 1680 | 1665 |
| | Further added styrene | g | 200 | 200 | 0 | 800 | 650 | 200 | 1000 | 200 | 200 | 0 | 0 | 0 |
| | Butadiene | g | 2100 | 750 | 1620 | 1620 | 1620 | 1620 | 1620 | 1620 | 1620 | 1350 | 1320 | 1335 |
| Solvent | Cyclohexane | g | 21000 | 21000 | 21000 | 21000 | 21000 | 21000 | 21000 | 21000 | 21000 | 21000 | 21000 | 21000 |
| Polar substance | THF | mol | 0.45 | 0.60 | 0.54 | 0.63 | 0.66 | 0.42 | 0.54 | 0.79 | 0.33 | 0.00 | 0.00 | 0.00 |
| | BOP | mmol | 2.7 | 23.8 | 0.9 | 1.7 | 2.2 | 8.2 | 3.6 | 19.8 | 0.5 | 0.0 | 5.2 | 1.9 |
| | KTA | mmol | 0 | 2.0 | 1.4 | 0 | 1.3 | 14 | 0 | 2.0 | 0.3 | 0.0 | 0.0 | 0.0 |
| | KDO | mmol | 0 | 0 | 0 | 0 | 0 | 0 | 0 | 0 | 0 | 0.5 | 0 | 2.0 |
| | EMP | mmol | 0 | 0 | 0 | 0 | 0 | 0 | 0 | 0 | 0 | 14.3 | 0 | 0 |
| | EGDE | mmol | 0 | 0 | 0 | 0 | 0 | 0 | 0 | 0 | 0 | 0 | 0 | 0 |
| | NaTA | mmol | 0 | 0 | 0 | 0 | 0 | 0 | 0 | 0 | 0 | 0 | 0 | 0 |
| Polymerization initiator | nBL | mmol | 15.0 | 19.9 | 18.1 | 20.9 | 22.1 | 14.1 | 17.9 | 39.5 | 6.5 | 5.1 | 5.2 | 5.7 |
| Coupling agent | Compound 1 | mmol | 0 | 0 | 0 | 0 | 0 | 0 | 0 | 0 | 0 | 0 | 0 | 0 |
| | Compound 2 | mmol | 0 | 0 | 0 | 0 | 0 | 0 | 0 | 0 | 0 | 0 | 0 | 0 |
| Polymerization terminator | Methanol | mmol | 16 | 22 | 20 | 23 | 24 | 15 | 20 | 43 | 8 | 6 | 6 | 6 |

(continued)

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|
| Polymerization temperature | Polymerization start temperature | °C | 33 | 33 | 30 | 35 | 35 | 33 | 36 | 33 | 33 | 50 | 50 | 50 |
| | Polymerization end temperature | °C | 78 | 75 | 74 | 72 | 72 | 76 | 73 | 76 | 76 | 65 | 65 | 72 |

[Table 4]

| | | Example 1 | Example 2 | Example 3 | Example 4 | Example 5 | Example 6 | Example 7 | Example 8 | Example 9 |
|---|---|---|---|---|---|---|---|---|---|---|
| Aromatic vinyl monomer unit content | % by mass | 51 | 54 | 61.5 | 62 | 38 | 36 | 46 | 47 | 58 |
| Amount of 1,2-vinyl bond | % by mol | 51 | 50 | 44 | 48 | 45 | 26 | 29 | 25 | 22 |
| (A) Relative intensity at 6.0 ppm or more and less than 6.7 ppm | % | 7 | 3 | 4 | 12 | 3 | 8 | 11 | 6.5 | 14 |
| (B) Relative intensity at 6.7 ppm or more and less than 6.94 ppm | % | 11 | 16 | 18 | 12 | 10 | 14 | 18 | 13.5 | 22 |
| (C) Relative intensity at 6.94 ppm or more and 7.60 pp or less | % | 82 | 81 | 78 | 76 | 87 | 78 | 71 | 80 | 64 |
| (A) + (B) | % | 18 | 19 | 22 | 24 | 13 | 22 | 29 | 20 | 36 |
| Peak top molecular weight of peak having largest area in GPC | 10K | 23 | 30 | 24 | 24 | 22 | 24 | 19 | 27 | 23 |
| Mooney viscosity (ML5+4) | | 104 | 87 | 74 | 108 | 73 | 92 | 60 | 60 | 126 |
| Degree of coupling | % | 0 | 0 | 0 | 0 | 0 | 0 | 0 | 0 | 0 |
| Degree of modification | % | 0 | 0 | 0 | 0 | 0 | 0 | 0 | 0 | 0 |

[Table 5]

| | | Example 10 | Example 11 | Example 12 | Example 13 | Example 14 | Example 15 | Example 16 | Example 17 | Example 18 |
|---|---|---|---|---|---|---|---|---|---|---|
| Aromatic vinyl monomer unit content | % by mass | 46.5 | 65 | 60 | 38 | 43 | 36 | 48 | 48 | 48 |
| Amount of 1,2-vinyl bond | % by mol | 46 | 50 | 25 | 22 | 50 | 53 | 45 | 44 | 44 |
| (A) Relative intensity at 6.0 ppm or more and less than 6.7 ppm | % | 5 | 18 | 3 | 4 | 7 | 3 | 6 | 6 | 5 |
| (B) Relative intensity at 6.7 ppm or more and less than 6.94 ppm | % | 12 | 9 | 14 | 16 | 3 | 4 | 12 | 12 | 10 |
| (C) Relative intensity at 6.94 ppm or more and 7.60 pp or less | % | 83 | 73 | 83 | 80 | 90 | 93 | 82 | 82 | 82 |
| (A) + (B) | % | 17 | 27 | 17 | 20 | 10 | 7 | 18 | 18 | 15 |
| Peak top molecular weight of peak having largest area in GPC | 10K | 36 | 18 | 16 | 17 | 28 | 34 | 16 | 47 | 47 |
| Mooney viscosity (ML5+4) | | 134 | 80 | 50 | 68 | 72 | 73 | 120 | 114 | 95 |
| Degree of coupling | % | 0 | 0 | 0 | 0 | 0 | 0 | 40 | 63 | 65 |
| Degree of modification | % | 0 | 0 | 0 | 0 | 0 | 0 | 40 | 0 | 65 |

[Table 6]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Aromatic vinyl monomer unit content | % by mass | 30 | 75 | 46 | 46 | 46 | 46 | 46 | 46 | 46 | 55 | 56 | 55.5 |
| Amount of 1,2-vinyl bond | % by mol | 40 | 40 | 18 | 23 | 26 | 40 | 40 | 40 | 40 | 43.3 | 49 | 40 |
| (A) Relative intensity at 6.0 ppm or more and less than 6.7 ppm | % | 4 | 10 | 10 | 22 | 10 | 0 | 30 | 6 | 6 | 28 | 8 | 24 |
| (B) Relative intensity at 6.7 ppm or more and less than 6.94 ppm | % | 10 | 21 | 19 | 23 | 28 | 9 | 8 | 16 | 16 | 47 | 37 | 46 |
| (C) Relative intensity at 6.94 ppm or more and 7.60 pp or less | % | 86 | 69 | 71 | 55 | 62 | 91 | 62 | 78 | 78 | 25 | 55 | 30 |
| (A) + (B) | % | 14 | 31 | 29 | 45 | 38 | 9 | 38 | 22 | 22 | 75 | 45 | 70 |
| Peak top molecular weight of peak having largest area in GPC | 10K | 29 | 17 | 22 | 19 | 18 | 28 | 20 | 10 | 62 | 73 | 71 | 65 |
| Mooney viscosity (ML5+4) | | 70 | 78 | 104 | 120 | 113 | 80 | 110 | 37 | 144 | 155 | 150 | 148 |
| Degree of coupling | % | 0 | 0 | 0 | 0 | 0 | 0 | 0 | 0 | 65 | 0 | 0 | 0 |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Degree of modification | % | 0 | 0 | 0 | 0 | 0 | 0 | 0 | 0 | 0 | 0 | 0 | 0 |

[Application Examples 1 to 18 and Application Comparative Examples 1 to 12]

Each of the conjugated diene-based polymers 1 to 30 shown in Tables 4 to 6 was used as a starting material rubber, and a conjugated diene-based polymer composition containing each starting material rubber was obtained according to the following prescription.

The conjugated diene-based polymer of Example 1 was used in Application Example 1, and the conjugated diene-based polymer of Comparative Example 1 was used in Application Comparative Example 1. Likewise, Example Nos. and Comparative Example Nos. have correspondence relationships with Application Example Nos. and Application Comparative Example Nos., respectively.

(Conjugated diene-based polymer composition)

Starting material rubber (conjugated diene-based polymers 1 to 30): 100.0 parts by mass

Carbon black (manufactured by Tokai Carbon Co., Ltd., "Seast KH (N339)): 80.0 parts by mass

S-RAE oil (manufactured by Japan Energy, Inc., JOMO Process NC140): 20.0 parts by mass

Resin (manufactured by Eastman Chemical Company, KRISTALEX F85): 20.0 parts by mass

Wax (manufactured by Ouchi Shinko Chemical Industrial Co., Ltd., Sunnoc N): 1.5 parts by mass

Zinc flower: 2.0 parts by mass

Stearic acid: 2.0 parts by mass

Anti-aging agent (N-isopropyl-N'-phenyl-p-phenylenediamine): 1.0 part by mass

Sulfur: 1.0 part by mass

Vulcanization accelerator (N-cyclohexyl-2-benzothiazyl sulfinamide): 2.5 parts by mass

Vulcanization accelerator (tetrabenzylthiuram disulfide): 1.0 part by mass

Total: 231.0 parts by mass

The above materials were kneaded by the following method to obtain a conjugated diene-based polymer composition.

A sealed kneading machine (interior volume 0.3 L) equipped with a temperature control apparatus was used to knead the starting material rubber (conjugated diene-based polymers 1 to 27), filling agent (carbon black), process oil (S-RAE oil and wax), zinc flower, and stearic acid under conditions involving a filling degree of 65% and a number of rotor rotations of 50/57 rpm, as the first stage kneading. The temperature of the sealed mixing machine was here controlled and a modified conjugated diene-based polymer composition was obtained at a discharge temperature (blended product) of 155 to 160°C.

After the blended product thus obtained was cooled to room temperature, the anti-aging agents were added and kneaded again, as the second stage kneading. In this case as well, a discharge temperature (blended product) was adjusted to 155 to 160°C by the temperature control of the mixing machine.

After cooling, sulfur and the vulcanization accelerators were added and kneaded in an oven roll set to 70°C, as the third stage kneading.

Then, each of 2 mm thick and 3 mm thick sheets was formed and vulcanized with vulcanization press at 160°C for 20 minutes.

Here, for a test on high temperature tensile characteristics, a test specimen was prepared from the 2 mm thick vulcanized sheet in a punching machine. For a viscoelasticity test, a test specimen was prepared from the 3 mm thick vulcanized sheet in a punching machine.

For a DIN wear test, one sample was vulcanized using a mold so as to attain a diameter of 16 mm and a thickness of 8 mm.

After vulcanization, the physical properties of the conjugated diene-based polymer composition were measured.
The results of measuring the physical properties are shown in Tables 7 to 9.
The physical properties of the conjugated diene-based polymer composition which was a vulcanized product after vulcanization performed as described above were measured by the following methods.

((1) Processability: composition Mooney viscosity)

A portion of the kneaded conjugated diene-based polymer composition was sampled before molding, and the Mooney viscosity was measured.
A Mooney viscometer was used, and each specimen was preheated at 100°C for 1 minute according to JIS K6300-1, thereafter a rotor was rotated at 2 rpm for 4 minutes, followed by viscosity measurement.
A composition Mooney viscosity of 40 or more and 100 or less was evaluated as very favorable processability, a Mooney viscosity of more than 100 and 120 or less was evaluated as favorable processability, and a Mooney viscosity of more than 120 and 150 or less was evaluated as no problem in practical use.
On the other hand, a Mooney viscosity of less than 40 easily causes adhesion to equipment and deteriorates processability. A Mooney viscosity of 150 or more was evaluated as poor cohesive properties during kneading, susceptibility of a formed sheet to cutting, and poor processability.
The composition Mooney viscosity was expressed as ◎ for 30 or more and 100 or less, as ○ for more than 100 and 120 or less, as △ for more than 120 and 150 or less, as × for more than 150, and as × × for more than 165.

((2) High temperature tensile characteristics)

The tensile strength and elongation at 100°C were measured according to a tensile test method of JIS K6251.
The product of the tensile strength and elongation at 100°C was regarded as high temperature tensile characteristics. The absolute value of the product and the following evaluation are described in Tables 7 to 9.
A higher value of the high temperature tensile characteristics at 100°C is preferable, and based on the high temperature tensile characteristics of Application Example 13, 0% or more and 10% or less improvement was expressed as △, more than 10% and 30% or less improvement was expressed as ○, and more than 30% improvement was expressed as ◎. On the other hand, more than 0% and 10% or less deterioration was expressed as ×, and more than 10% deterioration was expressed as × ×.

((3) Wet grip properties and maneuvering stability)

A viscoelasticity tester (ARES) manufactured by Rheometric Scientific, Inc. was used for an index of wet grip properties and maneuvering stability, and a viscoelasticity parameter was measured on a torsional mode.
tanδ measured at a frequency of 10 Hz and a strain of 1% at 0°C was used as an index of wet grip properties, and a larger value was evaluated as indicating more favorable wet grip properties.
Based on the measurement value of Application Example 13 defined as 100, 0% or more and 15% or less improvement was expressed as △, more than 15% and 30% or less improvement was expressed as ○, and more than 30% improvement was expressed as ◎. On the other hand, more than 0% and 30% or less deterioration was expressed as ×, and more than 30% deterioration was expressed as × ×.
A storage modulus measured at a frequency of 10 Hz and a strain of 3% at 50°C was used as an index of stable maneuvering performance, and a larger value was evaluated as indicating more favorable maneuvering stability.
Based on the measurement value of Application Example 13 defined as 100, 0% or more and 15% or less improvement was expressed as △, more than 15% and 30% or less improvement was expressed as ○, and more than 30% **improvement** was expressed as ◎. On the other hand, more than 0% and 30% or less deterioration was expressed as ×, and more than 30% deterioration was expressed as × ×.

((4) Wear resistance)

The amount of wear was measured with a load of 44.1 N and 1000 rotations according to JIS K6264-2 using Akron wear tester (manufactured by Yasuda Seiki Seisakusho, Ltd.). A smaller amount of wear was better, and based on the measurement value of Application Example 13 defined as 100, 0% or more and 5% or less improvement was expressed as △, more than 5% and 15% or less improvement was expressed as ○, and more than 15% improvement was expressed as ◎. On the other hand, more than 0% and 20% or less deterioration was expressed as ×, and more than 20% deterioration was expressed as × ×.
Tables 7 to 9 describe relative values based on the measurement value of Example 13 defined as 100, and describe the above evaluation.

[Table 7]

| | | Application Example 1 | Application Example 2 | Application Example 3 | Application Example 4 | Application Example 5 | Application Example 6 | Application Example 7 | Application Example 8 | Application Example 9 |
|---|---|---|---|---|---|---|---|---|---|---|
| Processability | Evaluation rank | O | ○ | ○ | ○ | ○ | ○ | ○ | ○ | ○ |
| High temperature tensile characteristics | Absolute value | 2376 | 2574 | 2752 | 2465 | 1856 | 1736 | 2145 | 2245 | 2310 |
| | Evaluation rank | ○ | ◎ | ◎ | ○ | × | × | ○ | ○ | ○ |
| Wet grip properties | Evaluation rank | ○ | ○ | ◎ | ◎ | Δ | Δ | ○ | ○ | ◎ |
| Wear resistance | Relative value | 122 | 118 | 106 | 110 | 127 | 115 | 108 | 110 | 106 |
| | Evaluation rank | ◎ | ◎ | Δ | ○ | ◎ | ○ | ○ | ○ | ○ |
| Maneuvering stability | Evaluation rank | ○ | ○ | ○ | ◎ | ○ | ○ | ◎ | ○ | ◎ |

[Table 8]

| | | Application Example 10 | Application Example 11 | Application Example 12 | Application Example 13 | Application Example 14 | Application Example 15 | Application Example 16 | Application Example 17 | Application Example 18 |
|---|---|---|---|---|---|---|---|---|---|---|
| Processability | Evaluation rank | Δ | ○ | ◎ | ◎ | ○ | ○ | ◎ | ◎ | ◎ |
| High temperature tensile characteristics | Absolute value | 2278 | 2336 | 2170 | 1920 | 1856 | 1792 | 2046 | 1980 | 1860 |
| | Evaluation rank | ○ | ○ | ○ | Δ | × | × | Δ | Δ | × |
| Wet grip properties | Evaluation rank | ◎ | ◎ | ○ | 100 | ○ | Δ | Δ | ○ | Δ |
| Wear resistance | Relative value | 128 | 101 | 104 | 100 | 125 | 129 | 106 | 103 | 104 |
| | Evaluation rank | ◎ | Δ | Δ | Δ | ◎ | ◎ | ○ | Δ | Δ |
| Maneuvering stability | Evaluation rank | ○ | ◎ | ○ | 100 | ○ | Δ | ○ | ○ | Δ |

[Table 9]

| | | Application Comparative Example 1 | Application Comparative Example 2 | Application Comparative Example 3 | Application Comparative Example 4 | Application Comparative Example 5 | Application Comparative Example 6 | Application Comparative Example 7 | Application Comparative Example 8 | Application Comparative Example 9 | Application Comparative Example 10 | Application Comparative Example 11 | Application Comparative Example 12 |
|---|---|---|---|---|---|---|---|---|---|---|---|---|---|
| Processability | Evaluation rank | ○ | × | Δ | ○ | ○ | ○ | ×× | ◎ | ×× | ×× | ×× | × |
| High temperature tensile characteristics | Absolute value | 1064 | 2356 | 1170 | 2208 | 2139 | 1624 | 2112 | 806 | 2277 | 2310 | 2048 | 2208 |
| | Evaluation rank | ×× | ○ | ×× | ○ | ○ | ×× | Δ | ×× | ○ | ○ | Δ | ○ |
| Wet grip properties | Evaluation rank | × | ○ | × | ○ | ○ | Δ | ○ | ○ | ○ | ◎ | ◎ | ◎ |
| Wear resistance | Relative value | 134 | 82 | 112 | 73 | 75 | 113 | 96 | 77 | 120 | 74 | 80 | 70 |
| | Evaluation rank | ◎ | × | ○ | ×× | ×× | ○ | × | ×× | ◎ | ×× | × | ×× |
| Maneuvering stability | Evaluation rank | ○ | ○ | ○ | ○ | ○ | × | ○ | × | ○ | ○ | ○ | ○ |

Five physical properties, that is, processability, high temperature tensile characteristics, wet grip properties, wear resistance, and maneuvering stability, were evaluated herein. Examples were given one or less ×. Comparative Examples were given two or more ×. In the tables, × × was counted as two ×.

The conjugated diene-based polymers obtained in Examples 1 to 18 and the conjugated diene-based polymer compositions obtained in Application Examples 1 to 18 were found to have sufficient high temperature tensile strength, wet grip performance, maneuvering stability, and wear resistance in practical use while maintaining processability, as compared with the conjugated diene-based polymers obtained in Comparative Examples 1 to 12 and the conjugated diene-based polymer compositions or the crosslinked products of the conjugated diene-based polymers of Application Comparative Examples 1 to 12.

The present application is based on the Japan patent application (Japanese Patent Application No. 2023-044151) filed on March 20, 2023 with the Japan Patent Office, the contents of which are incorporated herein by reference.

**Industrial Applicability**

The conjugated diene-based polymer and the conjugated diene-based polymer composition of the present invention have industrial applicability as, for example, a material for tires, packings, gaskets, seal materials, vibration isolation rubber, vibration control rubber, vibration insulation rubber, conveyer belts, transmission belts, outsoles for shoes, midsoles for shoes, weather strip for automobiles, glass run, trunk lids, members for rail cars, members for aircrafts, waterproof sheets, engine mounts, air springs, rubber gloves, medical and sanitary goods, hoses for industrial and various applications, battery cases, adhesives, wire coverings, window frame rubber, rubber rolls, rubber rollers for OA equipment, spinning, or the like, keypads, keyboard covers, hydroscopes, swimming caps, container bags, ocean-related components, interior floor materials, artificial muscle materials, and various industrial products.

**Claims**

**1.** A conjugated diene-based polymer, wherein

a content of an aromatic vinyl monomer unit is 35% by mass or more and 70% by mass or less,
an amount of 1,2-vinyl bond in a conjugated diene monomer unit is 21% by mol or more and 65% by mol or less,
(A) a relative intensity at 6.0 ppm or more and less than 6.7 ppm, (B) a relative intensity at 6.7 ppm or more and less than 6.94 ppm, and (C) a relative intensity at 6.94 ppm or more and 7.60 ppm or less in $^{1}$H-NMR are (A) 0.5% or more and 25% or less, (B) 2% or more and 25% or less, and (C) 60% or more and 96.5% or less based on 100% in total of (A) + (B) + (C), and
a peak top molecular weight of a peak having the largest area in a molecular weight distribution curve in gel permeation chromatography (GPC) is 150000 or more and 600000 or less.

**2.** The conjugated diene-based polymer according to claim 1, wherein
the content of the aromatic vinyl monomer unit is 45% by mass or more and 60% by mass or less.

**3.** The conjugated diene-based polymer according to claim 1, wherein
a degree of modification is 60% or less.

**4.** The conjugated diene-based polymer according to claim 1, wherein
a total value of the relative intensities of (A) + (B) is 17% or more and 39% or less.

**5.** The conjugated diene-based polymer according to claim 1, wherein

the relative intensity (A) is 5% or more and 15% or less, and
the relative intensity (C) is 60% or more and 96% or less.

**6.** The conjugated diene-based polymer according to claim 1, wherein

the relative intensity (A) is 0.5% or more and 15% or less, and
the relative intensity (C) is 60% or more and 96% or less.

**7.** The conjugated diene-based polymer according to claim 1 which is a rubber bale formed body.

**8.** A conjugated diene-based polymer composition comprising the conjugated diene-based polymer according to any one of claims 1 to 6.

**9.** The conjugated diene-based polymer composition according to claim 8 which is a composition for a tire.

**10.** The conjugated diene-based polymer composition according to claim 8 which is a composition for a shoe sole.

**11.** The conjugated diene-based polymer composition according to claim 8 which is a composition for a vibration isolation rubber.

**INTERNATIONAL SEARCH REPORT**

International application No. **PCT/JP2024/010046**

**A. CLASSIFICATION OF SUBJECT MATTER**

***C08F 212/04***(2006.01)i; ***C08F 236/04***(2006.01)i
FI: C08F212/04; C08F236/04

According to International Patent Classification (IPC) or to both national classification and IPC

**B. FIELDS SEARCHED**

Minimum documentation searched (classification system followed by classification symbols)

C08C19/00-19/44; C08F6/00-246/00; C08F293/00-297/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-030649 A (ASAHI KASEI KABUSHIKI KAISHA) 18 February 2022 (2022-02-18) claims 1-11, examples | 1-11 |
| A | JP 2020-203991 A (JAPAN ELASTOMER CO., LTD.) 24 December 2020 (2020-12-24) claims 1-6, examples | 1-11 |
| A | WO 2022/034865 A1 (ASAHI KASEI KABUSHIKI KAISHA) 17 February 2022 (2022-02-17) claims 1-16, examples | 1-11 |
| A | JP 2019-143081 A (JAPAN ELASTOMER CO., LTD.) 29 August 2019 (2019-08-29) claims 1-10, examples | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/010046**

| Patent document cited in search report | Publication date (day/month/year) | Patent family member(s) | Publication date (day/month/year) |
|---|---|---|---|
| JP 2022-030649 A | 18 February 2022 | EP 3950814 A1<br>claims 1-11, examples<br>CN 114058151 A | |
| JP 2020-203991 A | 24 December 2020 | (Family: none) | |
| WO 2022/034865 A1 | 17 February 2022 | US 2023/0257560 A1<br>claims 1-17, examples<br>EP 4197936 A1<br>KR 10-2023-0021703 A<br>CN 116056985 A | |
| JP 2019-143081 A | 29 August 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012119918 A
- WO 2012175680 A
- JP 59140211 A
- JP 2023044151 A

### Non-patent literature cited in the description

- **Y. TANAKA et al.** *Rubber Chemistry and Technology*, 1981, vol. 54 (4), 685-691